# EUROPÄISCHE PATENTSCHRIFT

(11) **EP 0 868 331 B1**
(45) Veröffentlichungstag und Bekanntmachung des Hinweises auf die Patenterteilung: **15.03.2000**
(21) Anmeldenummer: 96943029.7
(22) Anmeldetag: 04.12.1996
(51) Int. Cl.: B60S 1/08, B60S 1/16

(54) **DECKEL FÜR EIN GETRIEBEGEHÄUSE**
DRIVE HOUSING COVER
COUVERCLE POUR BOITIER POUR DISPOSITIF D'ENTRAINEMENT

(30) Priorität: 27.12.1995 DE 19548823
(43) Veröffentlichungstag der Anmeldung: 07.10.1998
(73) Patentinhaber: ITT Automotive Europe GmbH, 60488 Frankfurt (DE)
(72) Erfinder: ADE, Rolf, D-74321 Bietigheim-Bissingen (DE); SCHEELE, Hubert, D-74189 Weinsberg (DE); WALTHER, Bernd, D-74321 Bietigheim-Bissingen (DE); CSERMAK, Martin, D-74321 Bietigheim-Bissingen (DE)
(74) Vertreter: Dreiss, Fuhlendorf, Steimle & Becker
(86) Internationale Anmeldenummer: EP9605402
(87) Internationale Veröffentlichungsnummer: WO9724244

(56) Entgegenhaltungen:
- WO-A-92/13381
- DE-A- 3 838 285
- DE-A- 4 234 202

## Beschreibung

Die Erfindung bezieht sich auf einen Deckel für ein Getriebegehäuse gemäß dem Oberbegriff des Anspruchs 1.

Derartige Deckel werden insbesondere in Antriebsaggregate für Scheibenwischeranlagen eingesetzt. Das Antriebsaggregat besteht aus einem Elektromotor, der ein Schneckenradgetriebe antreibt. Das Getriebe ist in einem topfförmigen Gehäuse untergebracht, an das seitlich der Elektromotor anschließt. Im Gehäuse liegt das Schneckenrad, wobei die Abtriebsachse durch den Boden des Gehäuses nach außen geführt ist. Das Getrieberad wird von einer Schnecke angetrieben, das in der Verlängerung der Motorwelle ausgebildet ist.

Das Schneckenrad verfügt an der Seite, die der offenen Seite des Gehäuses zugewandt ist, über Kontaktbahnen, die mit Kontaktfahnen an der Unterseite des Gehäusedeckels zusammenwirken. Kontaktbahnen und Kontaktfahnen bilden einen sog. Parkstellungsschalter, mit dem erreicht wird, daß die vom Aggregat angetriebenen Scheibenwischer auch nach Abschalten des Hauptschalters mit Strom versorgt werden, bis die Scheibenwischer ihre Parkstellung an der Unterkante der Windschutzscheibe erreicht haben.

Die Kontaktfahnen werden dabei über Leiterbahnen, die an der Außenseite des Deckels verlaufen, mit Strom versorgt. Dabei sind die Leiterbahnen in eine Kunststoffschicht eingebettet, die an den Deckel angespritzt wird und die in der Regel über einen Abschnitt verfügt, der als Stecker ausgebildet ist.

In der Regel weist diese Kunststoffschicht eine Ausdehnung auf, die ausreicht, die Leiterbahnen zu überdecken bzw aufzunehmen.

Die Seitenwände, die den Rand der Kunststoffschicht bilden, stehen babei senkrecht auf der Außenfläche des metallischen Gehäusedeckels.

Diese Anordnung ist nur wenig gegen Korrosion geschützt. Die unterschiedlichen Wärmeausdehnungskoeffizienten von Kunststoff und Metall führen dazu, daß sich bei extremen Temperaturschwankungen, denen das Aggregat im Fahrzeug ausgesetzt ist, der Rand der Kunststoffschicht vom Deckel löst, so daß Schmutz und Regenwasser eindringen können. Außerdem muß der metallische Deckel sehr stabil ausgelegt werden, damit Verspannungen im Kunststoff nicht dazu führen, daß sich der Deckel verbiegt.

Aus der gattungsgemäßen DE-A-38 38 285 ist ein Kleinmotor zum Antrieb von Scheibenwischeranlagen bekannt. Dieser Kleinmotor besitzt ein Motorgehäuse, das einen zylindrischen Mantel und einen Boden aufweist, durch den eine Stirnseite des Mantels verschlossen ist.

Der Erfindung liegt daher die Aufgabe zugrunde den Deckel so auszubilden, daß er korrosionsgeschützt ist. Gleichzeitig soll er eine ausreichende Stabilität bei möglichst geringem Gewicht aufweisen.

Die Aufgabe wird mit einem Deckel für ein Getriebegehäuse gelöst, der die Merkmale des Anspruchs 1 aufweist.

Die Kunststoffschicht ist dabei derart über die Außenfläche der Grundplatte ausgedehnt, daß die Kunststoffschicht die Grundplatte in mindestens zwei Randsegmenten übergreift, wobei die Unterkante der Kunststoffschicht in diesen Segmenten mit der Unterseite der Grundplatte abschließt und daß die Randsegmente, die von der Kunststoffschicht übergriffen sind, mindestens 90 Grad, gemessen am Umfang der Grundplatte, auseinanderliegen.

Um eine ausreichende Stabilität der Kombination aus Kunststoffschicht und metallischer Grundplatte zu erreichen, sollte die Ausdehnung der übergriffenen Randsegmente mindestens 90, wenn nicht 180 oder gar 270 Grad betragen.

Dies hat zur Folge, daß die einzelnen Abschnitte, in denen die Grundplatte übergriffen wird, ineinander übergehen und einen Rahmen bildet, der die metallische Platte zumindest zum Teil wenn nicht sogar vollständig umfaßt.

Diese Rahmenstruktur hat außerdem zur Folge, daß der Übergang zwischen Kunststoffschicht und Metallplatte an der Unterseite der Grundplatte erfolgt, die vom Auflagerand des Getriebegehäuses abgedeckt ist.

Um eine besonders innige Verbindung zwischen der Kunststoffschicht und der Metallgrundplatte zu erreichen, kann vorgesehen werden, daß diese an ihrer Unterseite randoffene Vertiefungen aufweist, in denen die Kunststoffschicht hineingreift und somit den Rand an diesen Stellen U-förmig umgreift.

Um den Ansatzpunkt für eindringendes Schmutz- oder Regenwasser möglichst gering zu halten, kann vorgesehen werden, daß die Kunststoffschicht die Außenseite der Grundplatte nahezu vollständig abdeckt.

In diesem Falle ist es günstig, auch an der Unterseite der Grundplatte ausgedehnte Kunststoffflächen vorzusehen, die für eine gewisse Gegenspannung sorgen, damit sich die Grundplatte beim Erkalten der Kunststoffschicht nach dem Spritzgießen nicht verzieht.

Die Grundplatte weist Öffnungen aus, deren Ränder von der Kunststoffschicht umgriffen sind, wobei durch diese Öffnungen eine Verbindung zwischen der Kunststoffschicht an der Außenseite und der Kunststoffschicht an der Innenseite der Grundplatte hergestellt wird. Gleichzeitig dienen diese Öffnungen dazu, elektrisch leitende Verbindungsstege zwischen den Leiterbahnen an der Außenseite der Grundplatte und den Kontaktfahnen an der Unterseite hindurchzuführen.

In der Regel sind für einen Parkstellungsschalter drei Kontaktfahnen notwendig. Es wird vorgeschlagen, diese Kontaktfahnen auf den Umfang der Grundplatte in etwa gleichmäßig zu verteilen, so daß die von den Kontaktbahnen ausgeübten Druckkräfte auf das Schneckenrad bzw. einer Schaltscheibe momentenfrei aufgebracht werden.

Der Deckel wird auf den Gehäuserand mit Nieten oder Schrauben befestigt. Dazu weist die Grundplatte Löcher auf, durch die die Nieten bzw. Schrauben hindurchgeführt sind.

Um an dieser Stelle eine ausreichende Abdichtung vorzusehen, wird vorgeschlagen, daß die Kunststoffschicht diese Löcher konzentrisch umgibt, wobei der Innendurchmesser der Löcher im Kunststoff dem Außendurchmesser dem Schraub- oder Nietenkopf entspricht. Der Kopf kann sich damit dichtend an den Innenrand der Löcher in der Kunststoffschicht anlegen.

Um hier eine gewisse Nachgiebigkeit der Kunststoffschicht zu erzielen, wird vorgeschlagen, daß die Kunststoffschicht im Bereich der Löcher verdünnt und als dünne Lochscheiben ausgebildet ist.
Dies ermöglicht es, das Nietwerkzeug besser ansetzen zu können

Eine weitere Form der Abdichtung der Befestigungslöcher besteht darin, daß der Kunststoff, der sich an der Unterseite der Grundplatte befindet, sich bis zu den Löchern erstreckt und hülsenförmig in diese Löcher eingreift, wobei der Innendurchmesser der Hülse dem Außendurchmesser des Schraubschaftes bzw. des Nietschaftes entspricht. Die abdichtung erfolgt dabei zwischen Hülse und Schaft.

Vorzugsweise wird an der Innenseite der Grundplatte das Zentrum von Kunststoff freigehalten, so daß dieser Bereich als Anlauffläche für die Abtriebsachse dienen kann.

Die Erfindung soll im folgenden anhand von mehreren Figuren näher erläutert werden. Dazu zeigt die
- Fig. 1: einen Schnitt durch ein Scheibenwischergetriebe entlang der Abtriebsachse.
- Fig. 2: zeigt den prinzipiellen Aufbau des Getriebedekkels, während die
- Fig. 3, 4: ein Detail des Deckels aufzeigen.

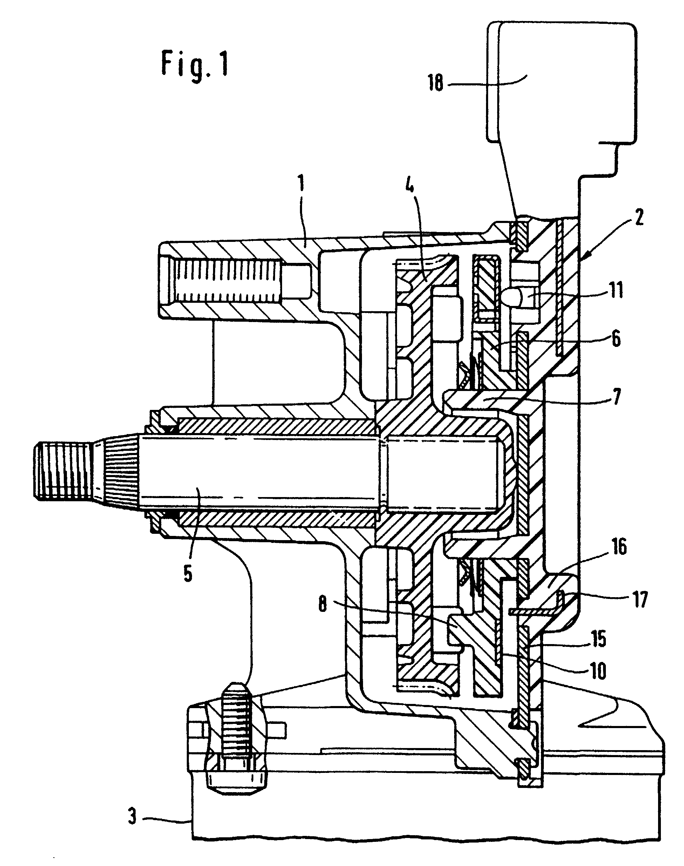

Als nächstes wird auf die Fig. 1 Bezug genommen. Das Getriebegehäuse besteht aus einem Gehäusetopf 1 sowie einem Deckel 2. Seitlich an den Gehäusetopf ist ein Motor 3 angeflanscht, dessen Motorwelle, was hier nicht näher dargestellt ist, sich in den Gehäusetopf hineinerstreckt und als Schnecke ausgebildet ist, die in der Verzahnung des dargestellten Schneckenrad 4 kämmt. Das Schneckenrad 4 entspricht in seiner radialen Ausdehnung in etwa dem Innendurchmesser des Gehäusetopfes 1. Durch den Boden des Gehäusetopfes ist eine Abtriebswelle 5 geführt, wobei das Schneckenrad fest mit dem Ende der Abtriebswelle 5 verbunden ist, das in den Gehäusetopf hineinragt. Axial gegenüber dem Schneckenrad 4 versetzt ist eine Schaltscheibe 6 vorgesehen, die als als Lochscheibe ausgebildet ist, die auf einem hülsenartigen Fortsatz 7 am Deckel drehbar gelagert ist. Die Schaltscheibe 6 ist mit dem Schneckenrad 4 über eine Mitnahmeeinrichtung 8 gekoppelt. Die Mitnahmeeinrichtung 8 ist so ausgebildet, daß bei einer Drehung des Schneckenrades in die eine Richtung die Schaltscheibe mitgenommen und bei einer Drehung in die andere Richtung die Schaltscheibe stehen bleibt.

An der Außenseite der Schaltscheibe 6, die der offenen Seite des Getriebetopfes 1 zugewandt ist, sind konzentrisch verlaufende Kontaktbahnen 10 aufgebracht, die zum Teil unterbrochen sind. Diese Kontaktbahnen 10 wirken mit Kontaktfedern 11 zusammen, die an der Unterseite des Deckels 2 befestigt sind.

Der Deckel 2 besteht aus einer metallischen Grundplatte 15, deren Ausdehnung der Öffnung des Getriebetopfes 1 entspricht und die mit mehreren Durchbrüchen versehen ist. An der Außenseite der metallischen Grundplatte ist eine Kunststoffschicht 16 vorgesehen, in der Leiterbahnen 17 verlaufen, die zu einem Stecker 18 führen, dessen Gehäuse einstückig mit der Kunststoffschicht ausgebildet ist und die andererseits Verbindungen zu den Kontaktfahnen 11 herstellen.

Außerdem wird über die Leiterbahnen 17 die elektrische Stromversorgung des Elektromotors hergestellt. Dazu verfügen die Leiterbahnen 17, was hier nicht näher dargestellt ist, über Kontaktstifte, die aus der Unterseite des Deckels hervorstehen, die mit entsprechenden Steckern korrespondieren, die im Getriebegehäuse angeordnet sind und die mit dem Elektromotor verbunden sind.

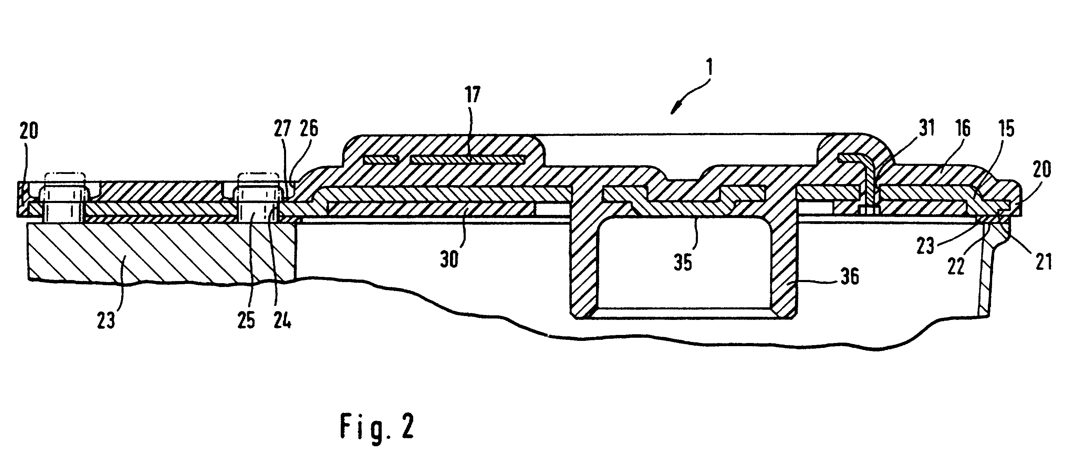

Die Fig. 2 zeigt einen vergrößerten Schnitt durch den Gehäusedeckel 2.

Die Darstellung entspricht nicht einem konkreten Schnitt durch den Deckel der Fig. 1, sondern dient lediglich dazu, den Aufbau des Deckels 1 zu erläutern.

Hauptbestandteil des Deckels 2 ist eine metallische Grundplatte 15, an deren Außenseite eine Kunststoffschicht 16 aufgebracht bzw. angespritzt ist.

Diese Kunststoffschicht 16 überdeckt die ganze Außenseite der Grundplatte 15. In ihr sind Leiterbahnen 17 eingebettet. Dabei handelt es sich um ein flaches Metallgitter, das im Abstand parallel zur Grundplatte 15 verläuft. Die Kunststoffschicht 16 übergreift mit ihrem Rand 20 den Rand der Grundplatte 15, so daß die Unterkante des Randes 20 mit der Unterseite der Grundplatte 15 abschließt. Die Abschnitte der Grundplatte 15, die in dieser Weise vom Rand der Kunststoffschicht 16 umgriffen werden, sollen bezogen auf den Umfang der Grundplatte möglichst groß sein. Angestrebt ist, daß der übergreifende Kunststoffrand 20 die Grundplatte vollständig rahmenartig umgreift. Damit wird dem Gehäuse eine entsprechende Stabilität verliehen, außerdem wird erreicht, daß die Stoßstelle 21 zwischen der Kunststoffschicht und der Grundplatte 15 entweder unmittelbar zur Auflage an den Rand 22 des Gehäusetopfes 1 oder an eine zwischen dem Rand 22 und den Deckel gelegte Dichtung 23 gelangt.

Die Stoßkante 21 ist somit nicht unmittelbar für Spritz- oder Regenwasser zugänglich, so daß die Gefahr einer Korrosion vermindert wird.

Eine weitere Problemzone hinsichtlich der Dichtigkeit und der Korrosionsbeständigkeit sind die Stellen, an denen der Gehäusedeckel 2 an den Gehäusetopf 1 angenietet bzw. verschraubt wird. Dazu weist die Grundplatte 15 Löcher 24 auf, in die, an dem Rand 22 des Gehäusetopfes 1 ausgebildete Nietköpfe 25 eingesteckt werden. Der aus dem Befestigungsloch 24 herausstehende Teil des Nietkopfes 25 wird niedergedrückt und legt sich auf die Außenseite der Grundplatte 15, wobei der sich verbreitende Nietkopf die Grundplatte 15 auf den Gehäuserand 22 hält.

Die Kunststoffschicht 16 ist in dem Bereich der Befestigungslöcher 24 ebenfalls lochartig unterbrochen, wobei der Durchmesser dem Durchmesser des Nietwerkzeuges entspricht. An den Rand des Loches 26 ist daher eine dünne Lochscheibe 27 angeformt, deren Innendurchmesser dem Außendurchmesser des niedergedrückten Nietkopfes entspricht. Gleichzeitig ist sie so flach ausgebildet, daß das Nietwerkzeuges den Nietkopf umfassen kann.

Wie aus der Fig. 2 weiter zu erkennen ist, sind auch an der Unterseite der Metallplatte 15 ausgedehnte Flächen mit einer Kunststoffschicht 30 bedeckt, wobei die Verbindung zwischen der Kunststoffschicht 16 an der Außenseite der Grundplatte 15 und der Kunststoffschicht 30 an der Unterseite über Durchbrüche 31 in der Grundplatte 15 erfolgt, die auch dazu dienen, die Leiterbahnen 17 zu den Kontaktfahnen 11 an der Unterseite des Gehäusedeckels 2 zu führen.

Im Zentrum des Deckels ist eine Fläche 35 von Kunststoff freigehalten. An diese Fläche 35 kann sich die Abtriebsachse des Getriebes axial abstützen. Die Fläche 35 ist von einer Hülse 36 konzentrisch umgeben, an deren Außenseite die Schaltscheibe drehbar gelagert ist. Dabei kann entweder die Außenseite der Hülse 36 oder die Innenkontur der Schaltscheibe 6 als Vieleck ausgebildet sein, so daß sich Hülse und Schaltscheibe nur punktuell berühren. In den Freiräumen zwischen den punktuellen Kontakten kann sich Schmiermittel ablagern.

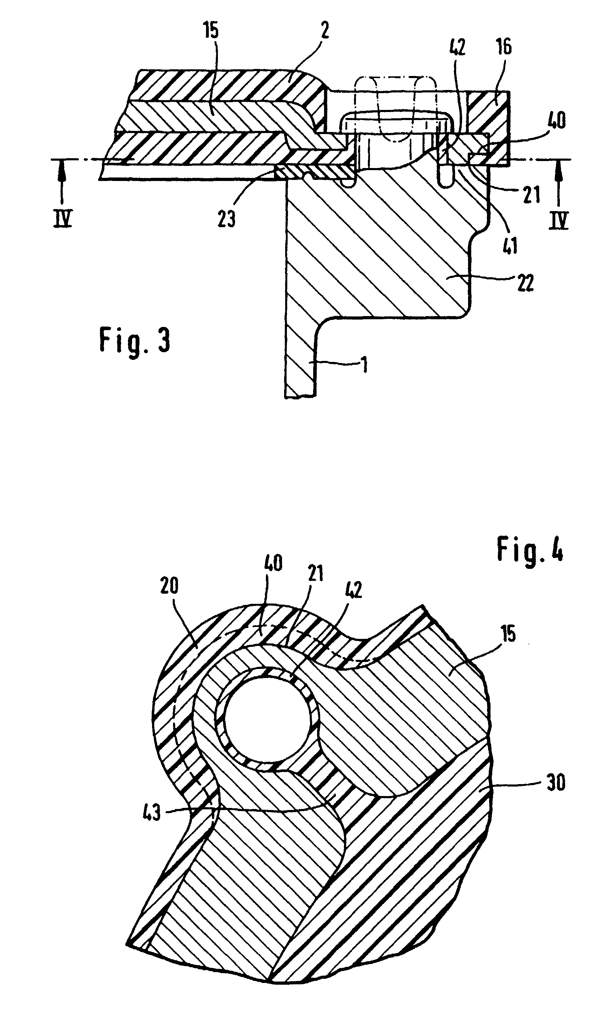

In der Fig. 3 ist eine weitere Verbindungsstelle des Gehäusedeckels 2 mit dem Gehäusetopf 1 bzw. seinem Rand 22 dargestellt. Fig. 4 zeigt dabei einen Schnitt entlang der Linie IV-IV in der Fig. 3. Außerdem erkennt man, daß die Grundplatte 15 randoffene Vertiefungen 40 aufweist, die mit Kunststoff ausgefüllt sind, die mit der Kunststoffschicht 16 an der Außenseite des Deckels verbunden sind. Dadurch greift die Kunststoffschicht 16 nicht nur über den Rand der Grundplatte 15, sondern umfaßt sie auch. Dies bewirkt erstens eine sichere Verbindung der Kunststoffschicht 16 mit der Grundplatte 15. Desweiteren läuft an dieser Stelle die Stoßkante zwischen dem Rand der Grundplatte 15 und der Kunststoffschicht 16 mäanderartig. Dies ist insbesondere an den Stellen interessant, an denen der Gehäusedeckel 2, ohne daß ein Dichtungsring dazwischengelegt ist, auf den Rand des Gehäuses 1 gelegt wird.

Eine derartige Ausbildung ist vor allen an den Stellen von Bedeutung, an denen der Gehäuserand Erhebungen aufweist. Die Erhebungen haben die im folgenden beschriebene Funktion.

Für die Ausrichtung des Gehäusedeckels zum Gehäusetopf reicht es vollkommen aus, wenn der Deckel an einigen Punkten, die auf gleichem Höhenniveau liegen, aufliegt. Dadurch läßt sich die entsprechende Gußform leichter einrichten, da nur dafür gesorgt werden muß, daß die Stellen, an denen der Gehäusedeckel aufliegt, auf gleicher Höhe liegen. Dies ist einfacher zu realisiern, als den gesamten Rand plan auszurichten.

In den Bereichen, in denen der Gehäusedeckel nicht auf den Erhebungen aufliegt, ist eine Dichtung 23 vorgesehen, die zusammenquetschbar ist. Die Dichtung füllt den Bereich zwischen den Rand des Gehäuses und den Deckel aus, der wegen der Erhebungen 41 eine gewissen Abstand zum Rand aufweist.

Die Übergreifung der Kunststoffschicht in randoffene Vertiefungen erfolgt somit insbesondere in den Bereichen, in denen die Grundplatte unmittelbar auf die entsprechenden Erhebungen 4labgelegt wird.

In der Fig. 3 und 4 ist außerdem eine weitere Abdichtungsmöglichkeit der Nietschäfte gezeigt. Dazu weist die Kunststoffschicht 30 an der Unterseite der Grundplatte 15 eine hülsenartige Erweiterung 42 auf, die sich von unten in die Befestigungslöcher erstreckt und sich an ihren Seitenwänden anlegt. Der Innendurchmesser der Hülse entspricht dem Außendurchmesser des Nietschafts. Der niedergedrückte Nietkopf übergreift die Hülse und legt sich an Bereiche der Außenseite der Grundplatte an, die von Kunststoff freigehalten sind.

Die Hülse ist über einen Steg 43 (siehe Fig. 4) mit den ausgedehnten Bereichen der Kunststoffschicht 30 an der Unterseite verbunden. Die Grundplatte 15 weist dazu einen entsprechenden Kanal auf.

## Patentansprüche

1. Deckel für ein Getriebegehäuse, der eine metallische Grundplatte (15) aufweist, auf deren Außenseite eine Kunststoffschicht (16) angeordnet ist, in die elektrisch leitende Metallbahnen (17) eingelagert sind, die der Stromversorgung von Kontaktfahnen (11) an der Unterseite des Deckels (1) dienen, dadurch **gekennzeichnet**, daß
- die Kunststoffschicht (16) die Außenfläche der Grundplatte (15) nahezu vollständig abdeckt,
- die Kunststoffschicht (16) den Umfangsrand der Grundplatte (15) nahezu vollständig übergreift, und
- die Unterkante der Kunststoffschicht (16) an den übergreifenden Stellen mit der Unterseite der Grundplatte (15) abschließt.

2. Deckel nach Anspruch 1, dadurch gekennzeichnet, daß die Übergreifungen ineinander übergehen und einen Rahmen bilden, der den Rand der Grundplatte zumindest zum Teil umfaßt.

3. Deckel nach Anspruch 1, dadurch gekennzeichnet, daß die Grundplatte (15) an ihrer Unterseite randoffene Vertiefungen (40) aufweist, in denen die Kunststoffschicht (16) den Rand der Grundplatte umgreift.

4. Deckel nach Anspruch 1, dadurch gekennzeichnet, daß die Grundplatte Öffnungen (31) aufweist, deren Ränder von der Kunststoffschicht umgriffen sind.

5. Deckel nach Anspruch 4, dadurch gekennzeichnet, daß die Kunststoffschicht an der Außenseite Löcher (26) aufweist, deren Ränder zu Schraub- oder Nietlöchern im Gehäusetopf konzentrisch verlaufen, wobei die Ränder Innendurchmesser besitzen, die dem Außendurchmesser eines niedergedrückten Nietkopfes entsprechen.

6. Deckel nach Anspruch 1, dadurch gekennzeichnet, daß die Kunststoffschicht (30) an der Unterseite der Grundplatte (15) sich bis zu den Befestigungslöchern erstreckt und sich in Form einer Hülse (42) bis zur Oberkante der Grundplatte erstreckt, wobei der Innendurchmesser der Hülse dem Außendurchmesser eines Nietschafts entspricht.

## Claims

1. A lid for a gear box, comprising a metallic base plate (15) and a plastic layer (16) arranged on the outer side of the base plate (15), in which plastic layer are embedded electrically conductive metal lines (17) serving for supplying power to contact flags (11) provided on the bottom side of the lid (1), characterized in that
- the plastic layer (16) covers the outer face of the base plate (15) almost totally,
- the plastic layer (16) overlaps the circumferential edge of the base plate (15) almost totally, and
- that the bottom edge of the plastic layer (16), at the overlapping locations, ends with the bottom side of the base plate (15).

2. A lid according to claim 1, characterized in that the overlapping portions pass over one into the other, forming a frame structure embracing the edge of the base plate at least in part.

3. A lid according to claim 1, characterized in that the base plate (15), at the bottom side thereof, includes recesses (40) open at the edge and engaged by the plastic layer (16).

4. A lid according to claim 1, characterized in that the base plate is provided with openings (31) the edges of which are seized by the plastic layer.

5. A lid according to claim 4, characterized in that the plastic layer, at the outer side thereof, is provided with holes (26), the edges of which extend concentrically to screw and rivet holes provided in the box pot, the inner diameter of the edges correspond to the outer diameter of a pressed-down rivet head.

6. A lid according to claim 1, characterized in that the plastic layer (30), at the bottom side of the base plate (15), extends to the mounting holes, and in the form of a sleeve (42), extends to the upper edge of the base plate, with the inner diameter of the sleeve corresponding to the outer diameter of the rivet shaft.

## Revendications

1. Couvercle pour un boîtier de mécanisme de transmission, qui comporte une plaque de base métallique (15) à la face extérieure de laquelle est disposée une couche (16) de matière plastique dans laquelle sont logées des pistes métalliques électriquement conductrices (17) servant à alimenter en courant des languettes de contact (11) placées à la face inférieure du couvercle (1),
caractérisé en ce que
- la couche (16) de matière plastique recouvre presque entièrement la surface extérieure de la plaque de base (15),
- la couche (16) de matière plastique recouvre presque entièrement le bord périphérique de la plaque de base (15), et que
- aux endroits recouverts, le bord inférieur de la couche (16) de matière plastique se termine au niveau de la face inférieure de la plaque de base (15).

2. Couvercle selon la revendication 1, caractérisé en ce que les endroits de recouvrement se fondent les uns dans les autres et forment ainsi un cadre qui enveloppe au moins une partie du bord de la plaque de base.

3. Couvercle selon la revendication 1, caractérisé en ce que la plaque de base (15) comporte, à sa face inférieure, des évidements (40) à bords ouverts, dans lesquels la couche (16) de matière plastique englobe le bord de la plaque de base.

4. Couvercle selon la revendication 1, caractérisé en ce que la plaque de base comporte des ouvertures (31) dont les bords sont englobés dans la couche de matière plastique.

5. Couvercle selon la revendication 4, caractérisé en ce que la couche de matière plastique comporte, à la face extérieure, des trous (26) dont les bords s'étendent concentriquement à des trous de vis ou de rivets ménagés dans la cloche de boîtier, les bords ayant un diamètre intérieur qui correspond au diamètre extérieur de la tête matée d'un rivet.

6. Couvercle selon la revendication 1, caractérisé en ce que la couche (30) de matière plastique située à la face inférieure de la plaque de base (15) s'étend jusqu'aux trous de fixation, et s'étend, sous forme d'une douille (42), jusqu'au bord supérieur de la plaque de base, le diamètre intérieur de la douille correspondant au diamètre extérieur de la tige d'un rivet.
